# EUROPEAN PATENT APPLICATION

(11) **EP 4 297 169 A1**
(43) Date of publication of application: **27.12.2023**
(21) Application number: 22857432.3
(22) Date of filing: 24.06.2022
(51) Int. Cl.: H01M 50/46, H01M 50/463

(54) **ELECTRODE ASSEMBLY, BATTERY CELL, BATTERY AND POWERED DEVICE**

(30) Priority: 19.08.2021 CN 202121959390 U
(71) Applicant: Contemporary Amperex Technology Co., Limited, Ningde, Fujian 352100 (CN)
(72) Inventor: SHANGGUAN, Huihui, Ningde, Fujian 352100 (CN); BAI, Ziyu, Ningde, Fujian 352100 (CN); TANG, Daichun, Ningde, Fujian 352100 (CN); DU, Xinxin, Ningde, Fujian 352100 (CN); HU, Yang, Ningde, Fujian 352100 (CN)
(74) Representative: Gong, Jinping
(86) International application number: PCT/CN2022/101317
(87) International publication number: WO 2023/020119

(57) **Abstract**

This application relates to an electrode assembly, a battery cell, a battery, and an electric device, and pertains to the technical field of battery manufacture. An electrode assembly is provided. The electrode assembly is a wound electrode assembly and includes a first separator and a second separator. A difference between a number of winding turns of the first separator and a number of winding turns of the second separator is greater than or equal to 1. The electrode assembly in embodiments of this application can reduce or avoid lithium precipitation, to improve safety of the battery cell.

## Description

### CROSS-REFERENCE TO RELATED APPLICATIONS

This application claims priority to Chinese Patent Application No. 202121959390.7, filed on August 19, 2021 and entitled "ELECTRODE ASSEMBLY, BATTERY CELL, BATTERY, AND ELECTRIC DEVICE", which is incorporated herein by reference in its entirety.

### TECHNICAL FIELD

This application relates to the field of battery manufacturing technologies, and specifically, to an electrode assembly, a battery cell, a battery, and an electric device.

### BACKGROUND

Energy conservation and emission reduction is crucial to sustainable development of the automobile industry. By virtue of the advantage of energy conservation and emission reduction, electric vehicles have become an important part for the sustainable development of the automobile industry. Battery technologies are a critical factor for development of electric vehicles.

Lithium-ion batteries as rechargeable batteries have advantages such as small size, high energy density, high power density, long cycle life, and long storage time.

A lithium-ion battery includes an electrode assembly and an electrolyte, and the electrode assembly includes a first electrode plate, a second electrode plate, and a separator sandwiched between the first electrode plate and the second electrode plate.

As a common abnormality of lithium-ion batteries, lithium precipitation affects charging efficiency and energy density of lithium ions, and serious lithium precipitation may cause lithium dendrites. The lithium dendrites may pierce through the separator to cause an internal short circuit and thermal runaway, thereby severely affecting safety of the batteries.

Therefore, how lithium precipitation is reduced or avoided to improve safety of the batteries has become a focus in the art.

### SUMMARY

This application aims to provide an electrode assembly, a battery cell, a battery, and an electronic device, so as to reduce or avoid lithium precipitation, thereby improving safety of the battery cell.

This application is implemented by using the following technical solutions.

According to a first aspect, this application provides an electrode assembly, where the electrode assembly is a wound electrode assembly and includes a first separator and a second separator, where a difference between a number of winding turns of the first separator and a number of winding turns of the second separator is greater than or equal to 1.

The binding force of the separator is related to the number of winding turns of the separator. In the prior art, the first separator and the second separator are finished synchronously, a number of layers of the separators is equal to the number of winding turns of the separators multiplied by 2, and with the same number of layers of separators, a smaller number of turns of the separators indicates weaker binding force of the separators, which likely causes the lithium precipitation and a decrease in safety performance of the battery. Based on the electrode assembly in the embodiments of this application, because the difference between the number of winding turns of the first separator and the number of winding turns of the second separator is greater than or equal to 1, the numbers of layers of the separators are less than the number of winding turns of the separators multiplied by 2. In contrast, with the same number of layers of separators, an increased number of winding turns of the separators indicates increased binding force of the separators, a reduced distance between the two adjacent electrode plates, and a reduced migration distance of lithium ions. Based on the kinetic performance, a migration capability of lithium ions is improved, which reduces or avoids occurrence of the lithium precipitation, thereby improving safety of the battery cell.

According to some embodiments of this application, a starting end of the first separator is located inward of the second separator, and a finishing end of the second separator is located inward of the first separator.

In the foregoing solution, inward refers to a side closer to a winding center, and outward refers to a side farther away from the winding center; and an inward separator refers to one of the first separator and the second separator, that has a starting end closer to the winding center when the first separator, the second separator, the first electrode plate, and the second electrode plate are wound. A position of the first separator determines that the first separator is an inward one of the two separators, and the first separator finally wraps the finishing end of the second separator, so as to improve the binding force of the separators.

According to some embodiments of this application, the difference between the number of winding turns of the first separator and the number of winding turns of the second separator is less than or equal to 5.

In the foregoing solution, the number of winding turns of the first separator being greater than the number of winding turns of the second separator mainly means that the first separator is wound by more turns than the second separator after the second separator is finished. Under the condition that the separators have large binding forces, the difference between the number of winding turns of the first separator and the number of winding turns of the second separator should not be excessively large. If the difference between the number of winding turns of the first separator and the number of winding turns of the second separator is excessively large, a total number of winding turns of the separators is excessively large, thereby greatly affecting energy density of the battery cell.

According to some embodiments of this application, the difference between the number of winding turns of the first separator and the number of winding turns of the second separator is an integer.

In the foregoing solution, the difference between the number of winding turns of the first separator and the number of winding turns of the second separator is the integer, so as to facilitate the separators to be finished in the same region, so that the finishing end of the first separator and the finishing end of the second separator can be fixed simultaneously, thereby ensuring a binding effect of the separators.

According to some embodiments of this application, the electrode assembly is flat-shaped and the electrode assembly includes a flat region and two bent regions, where the two bent regions are connected to two ends of the flat region, and both a finishing end of the first separator and a finishing end of the second separator are located at the flat region.

In the foregoing solution, both the finishing end of the first separator and the finishing end of the second separator are located at the flat region, thereby achieving a better finishing effect. Especially, when the finishing end of the first separator and the finishing end of the second separator are both wrapped with a same finishing adhesive, the first separator and the second separator can be better finished via the finishing adhesive.

According to some embodiments of this application, the finishing end of the first separator and the finishing end of the second separator are on a same side of the electrode assembly in a thickness direction, or the finishing end of the first separator and the finishing end of the second separator are on two sides of the electrode assembly in the thickness direction.

In the foregoing solution, in the embodiment in which the finishing end of the first separator and the finishing end of the second separator are on the same side of the electrode assembly in the thickness direction, the finishing end of the first separator and the finishing end of the second separator are on a same side of the flat region, so that the finishing adhesive is used to finish the finishing end of the first separator and the finishing end of the second separator. In the embodiment in which the finishing end of the first separator and the finishing end of the second separator are on the two sides of the electrode assembly in the thickness direction, both the finishing end of the first separator and the finishing end of the second separator are on two sides of the flat region, length of the first separator is greater than length of the second separator, and the finishing end of the second separator is clamped by the first separator in a ring inward of the second separator and the first separator at a ring outward of the second separator, which achieves a better finishing effect.

According to some embodiments of this application, the finishing end of the second separator is located inward of the finishing end of the first separator, and the finishing end of the first separator is provided with a notch to expose a part of the finishing end of the second separator.

In the foregoing solution, the notch is provided to expose a part of the finishing end of the second separator, and therefore, when the finishing adhesive is used for finishing, the finishing adhesive can be applied to both the finishing end of the first separator and the finishing end of the second separator, thereby achieving a better finishing effect.

According to a second aspect, this application provides a battery cell, including the electrode assembly in the foregoing embodiments.

According to a third aspect, this application provides a battery, including the battery cell in the foregoing embodiments.

According to a fourth aspect, this application provides an electric device, including the battery cell in the foregoing embodiments.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic structural exploded view of a battery cell according to some embodiments of this application;
FIG. 4 is a schematic diagram of an electrode assembly according to some embodiments of this application;
FIG. 5 is a schematic diagram of finishing of a separator according to some embodiments of this application;
FIG. 6 is a schematic diagram of an electrode assembly according to some other embodiments of this application;
FIG. 7 is a schematic diagram of an electrode assembly according to still other embodiments of this application;
FIG. 8 is a schematic diagram of finishing of a separator according to some other embodiments of this application;
FIG. 9 is a schematic diagram of finishing of a separator according to still other embodiments of this application;
FIG. 10 is a schematic diagram of a notch of a finishing end of a first separator according to some embodiments of this application;
FIG. 11 is a schematic diagram of a notch of a finishing end of a first separator according to some other embodiments of this application; and
FIG. 12 is a schematic diagram of a notch of a finishing end of a first separator according to still other embodiments of this application.

In the accompanying drawings, the figures are not drawn to scale.

Reference signs: 100 - battery; 10 - box; 101 - first portion; 102 - second portion; 20 - battery cell; 21 - housing; 22 - end cover; 23 - electrode assembly; 231 - first separator; 2311 - notch; 232 - second separator; 233 - first electrode plate; 234 - second electrode plate; P - flat region; W - bent region; 24 - electrode terminal; 25 - adapting sheet; 26 - finishing adhesive; 300 - motor; 400 - controller; 1000 - vehicle; and X - baseline.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A part of negative electrode current collector uncoated with the negative electrode active substance layer protrudes out of a part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of PP (polypropylene, polypropylene), PE (polyethylene, polyethylene), or the like.

The separator features electronic insulation and is used to isolate the positive electrode plate and the negative electrode plate that are adjacent, so as to prevent a short circuit between the positive electrode plate and the negative electrode plate that are adjacent. The separator has a large quantity of run-through micropores, and therefore, can ensure free passage of electrolyte ions and has good permeability performance for lithium ions. Therefore, the separator basically cannot block passage of lithium ions.

In order to make a lithium-ion battery cell smaller in volume and higher in energy density, a negative electrode plate, a positive electrode plate, and a separator in an electrode assembly cell of the lithium-ion battery cell may be wound or folded, and then compacted. The electrode assembly includes a flat region and bent regions located at two ends of the flat region. The flat region refers to a region with a parallel structure in the electrode assembly, that is, surfaces of the negative electrode plate, the positive electrode plate, and the separate in the flat region are all flat surfaces. The bent region refers to a region with a bent structure in the electrode assembly, that is, a negative electrode plate, a positive electrode plate, and a separator in the bent region are all bent. In other words, surfaces of each layer of a negative electrode plate, a positive electrode plate, and a separator in the bent region of the electrode assembly are all curved surfaces. In the embodiments of this application, the electrode assembly with a wound structure is used as an example for description. In the embodiments of this application, there are two separators, and the electrode assembly can be formed by stacking and winding the negative electrode plate, the first separator, the positive electrode plate, and the second separator, or can be formed by stacking and winding the first separator, the negative electrode plate, the second separator, and the positive electrode plate.

For the development of battery technology, many design factors need to be considered, for example, performance parameters such as energy density, cycle life, discharge capacity, and charge and discharge rate, as well as safety of the battery. Lithium precipitation is one of main factors affecting electrical performance and safety performance of the battery. Lithium precipitation not only reduces the electrical performance of the battery, but also is prone to forming lithium dendrites with accumulation of amount of lithium precipitated. The lithium dendrites may pierce through the separator and cause a short circuit in the battery, causing a safety hazard.

During charging of the lithium-ion battery cell, lithium ions are deintercalated from the positive electrode plate and intercalated into the negative electrode plate. However, some exceptions may occur, for example, insufficient space for lithium intercalation on the negative electrode plate, an excessively large distance between the negative electrode plate and the positive electrode plate, excessively large resistance for intercalation of lithium ions into the negative electrode plate, or excessively rapid deintercalation of lithium ions from the positive electrode plate, lithium ions deintercalated cannot be equally intercalated into the negative electrode active substance layer of the negative electrode plate so that lithium ions that cannot be intercalated into the negative electrode plate can only capture electrons on the surface of the negative electrode plate, and therefore, a silvery white metallic lithium is formed as an elementary substance, which is referred to as lithium precipitation. Lithium precipitation not only reduces performance of lithium-ion battery cell and greatly shortens the cycle life, but also limits a fast charging capacity of the lithium-ion battery cell. In addition, when lithium precipitation occurs in the lithium-ion battery, precipitated lithium metal is very active and can react with the electrolyte at a lower temperature, causing a lower self-heating start temperature and a higher self-heating rate of the battery cell, which severely affects safety of the battery cell. Furthermore, in case of severe lithium precipitation, deintercalated lithium ions may form lithium dendrites on the surface of the negative electrode plate, and the lithium dendrites are prone to pierce through the separator, causing a risk of short circuit between the adjacent positive electrode plate and negative electrode plate.

The inventors have found that lithium precipitation often occurs in the bent region of the electrode assembly. After further study, the inventors have found that a reason of the lithium precipitation is that binding force of the separator is weak, there is a large distance between two adjacent negative electrode plates and a positive electrode plate in the bent region, a migration distance of lithium ions is large, and under impact of the kinetic performance, a migration capability of lithium ions is reduced, resulting that lithium precipitation is easy to occur in the bent region. A reason why the binding force of the separator is weak is as follows: The binding force of the separator is related to a number of winding turns of the separator. In the prior art, in a process of winding the negative electrode plate, the positive electrode plate and the two separators (the first separator and the second separator) to form the electrode assembly, after the negative electrode plate is finished, the two separators are finished synchronously; and a number of layers of the separators (general term of the first separator and the second separator) is equal to the number of winding turns of the separators multiplied by 2. The number of winding turns of the separators refers to numbers of winding turns of the first separator and the second separator. Because the first separator and the second separator are finished synchronously, with the same number of layers of separators, a smaller number of turns of the separators indicates weaker binding force of the separators, which likely causes the lithium precipitation.

Based on the foregoing concepts, to resolve the lithium precipitation problem during use of the battery cell, after in-depth study, the inventors have designed an electrode assembly. The electrode assembly is a wound electrode assembly and includes a first separator and a second separator. A difference between a number of winding turns of the first separator and a number of winding turns of the second separator is greater than or equal to 1. The number of winding turns of the first separator is greater than the number of winding turns of the second separator. The difference between the number of winding turns of the first separator and the number of winding turns of the second separator is at least greater than 1.

In such an electrode assembly, because the difference between the number of winding turns of the first separator and the number of winding turns of the second separator is greater than or equal to 1, the numbers of layers of the separators are less than the number of winding turns of the separators multiplied by 2. In contrast, with the same number of layers of separators, the increased number of winding turns of the separators indicates increased binding force of the separators, a reduced distance between the two adjacent electrode plates in the bent region, and a reduced migration distance of lithium ions. Based on the kinetic performance, a migration capability of lithium ions is improved, which reduces or avoids occurrence of the lithium precipitation, thereby improving safety of the battery cell.

The battery cell disclosed in the embodiments of this application may be used without limitation in electric devices such as vehicles, ships, or aircrafts. The battery cell, the battery, and the like disclosed in this application may be used to constitute a power supply system of the electric device. This helps reduce or avoid occurrence of the lithium precipitation, improving safety of the battery.

An embodiment of this application provides an electric device that uses a battery as a power supply. The electric device may be but is not limited to a mobile phone, a tablet computer, a laptop computer, an electric toy, an electric tool, an electric bicycle, an electric motorcycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an example that the electric device is a vehicle in an embodiment of this application is used for description in the following embodiments.

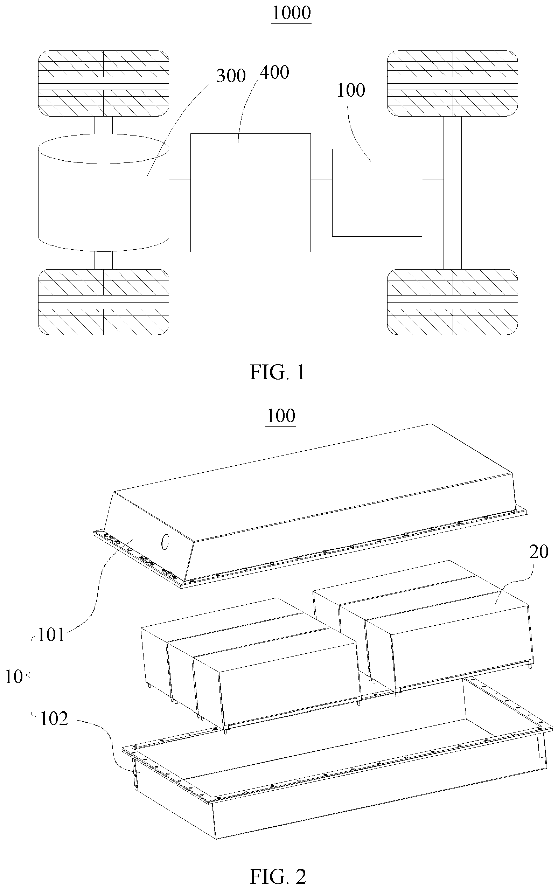

Refer to FIG. 1. FIG. 1 is a schematic structural diagram of a vehicle 1000 according to some embodiments of this application. The vehicle 1000 may be a fossil fuel vehicle, a naturalgas vehicle, or a new energy vehicle, where the new energy vehicle may be a battery electric vehicle, a hybrid electric vehicle, an extended-range vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power supply for the vehicle 1000 configured for a circuit system of the vehicle 1000, for example, to satisfy power needs of start, navigation, and running of the vehicle 1000.

The vehicle 1000 may further include a controller 400 and a motor 300, where the controller 400 is configured to control the battery 100 to supply power to the motor 300, for example, to satisfy power needs of start, navigation, and driving of the vehicle 1000.

In some embodiments of this application, the battery 100 can be used as not only the operational power supply for the vehicle 1000 but also a driving power supply for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 101 and a second portion 102. The first portion 101 and the second portion 102 fit together, so that the first portion 101 and the second portion 102 jointly define a space for accommodating the battery cells 20. The first portion 101 may be a plate structure, and the second portion 102 may be a hollow structure, where the first portion 101 covers an open side of the second portion 102 for the first portion 101 and the second portion 102 to jointly define an accommodating space; or the first portion 101 and the second portion 102 may both be hollow structures with one side open, where the open side of the first portion 101 is engaged with the open side of the second portion 102. The box 10 formed by the first portion 101 and the second portion 102 may have a variety of shapes, for example, cylinder or cuboid. As shown in FIG. 2, the box 10 in FIG. 2 is a cuboid.

The battery 100 may include a plurality of battery cells 20, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery 100 or a primary battery 100. The battery cell 20 in this application is a lithium-ion battery 100. The battery cell 20 may be of a cylindrical shape, a flat shape, a cuboid shape, or another shape. In this embodiment of this application, the battery cell 20 with a cuboid structure is used as an example for description.

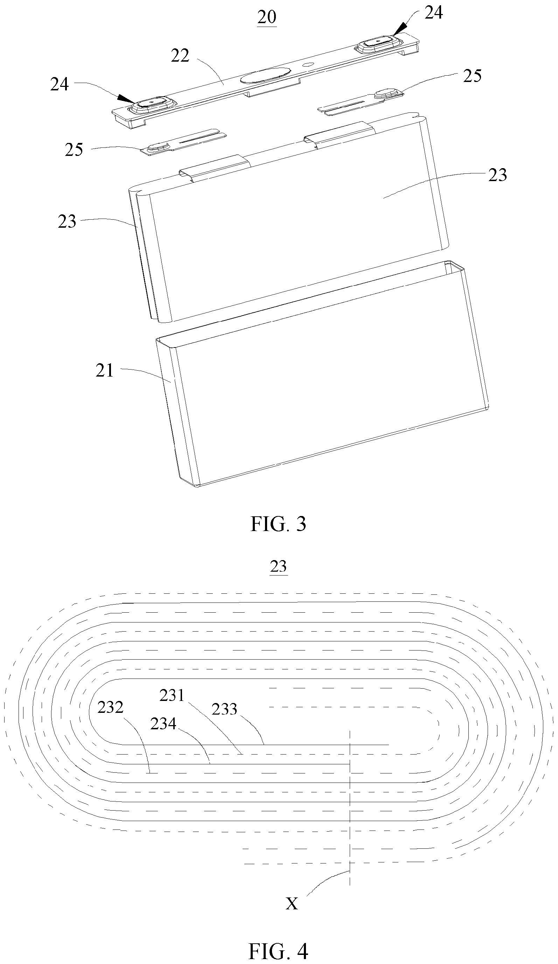

Refer to FIG. 3. FIG. 3 is a schematic structural exploded view of a battery cell 20 according to some embodiments of this application. The battery cell 20 is a smallest unit of the battery 100. As shown in FIG. 3, the battery cell 20 includes a housing 21, an end cover 22, an electrode assembly 23, an electrode terminal 24, an adapting sheet 25, and other functional components.

The housing 21 is a hollow structure and has an opening to place the electrode assembly 23 into the housing 21. The housing 21 may be of various shapes and sizes, such as a rectangular shape, a cylindrical shape, and a hexagonal prism shape. Specifically, a shape of the housing 21 may be determined according to a specific shape and size of the electrode assembly 23. In this embodiment of this application, the housing 21 in the rectangular shape is used as an example for description. The housing 21 may be made of various materials, such as copper, iron, aluminum, stainless steel, aluminum alloy, and plastic, which are not particularly limited in the embodiments of this application.

The end cover 22 refers to a component that covers an opening of the housing 21 to isolate an internal environment of the battery cell 20 from an external environment. A shape of the end cover 22 is not limited and may be adapted to a shape of the housing 21 to fit the housing 21. Optionally, the end cover 22 may be made of a material with specified hardness and strength (for example, aluminum alloy), so that the end cover 22 is less likely to deform when subjected to extrusion and collision, allowing the battery cell 20 to have higher structural strength and enhanced safety. The electrode terminal 24 is disposed on the end cover 22, and the electrode terminal 24 is electrically connected to the electrode assembly 23 via the adapting sheet 25 for outputting or inputting electrical energy of the battery cell 20. In some embodiments, the end cover 22 may further be provided with a pressure relief mechanism for releasing internal pressure when the internal pressure or a temperature of the battery cell 20 reaches a threshold. The end cover 22 may also be made of various materials, such as copper, iron, aluminum, stainless steel, aluminum alloy, and plastic, which are not particularly limited in the embodiments of this application. In some embodiments, an insulator may also be provided on an inner side of the end cover 22. The insulator may be configured to isolate an electrically connected component in the housing 21 from the end cover 22 to reduce a risk of short circuit. For example, the insulator may be made of plastic, rubber, or the like.

The end cover 22 and the housing 21 may be independent components, an opening may be provided in the housing 21, and the end cover 22 covers the opening to form the internal environment of the battery cell 20. The end cover 22 and the housing 21 are not limited and may also be integrated. Specifically, the end cover 22 and the housing 21 may form a shared connection surface before other components are disposed inside the housing, and then the housing 21 is covered with the end cover 22 when inside of the housing 21 needs to be enclosed.

The electrode assembly 23 is a component at which an electrochemical reaction occurs in the battery cell 20. The housing 21 may include one or more electrode assemblies 23. The electrode assembly 23 is mainly formed by winding or stacking a positive electrode plate and a negative electrode plate, and a separator is generally sandwiched between the positive electrode plate and the negative electrode plate. Parts of the positive electrode plate and the negative electrode plate that have active substances constitute a body portion of the electrode assembly 23, while parts of the positive electrode plate and the negative electrode plate that have no active substances separately constitute a tab. A positive tab and a negative tab may both be located at one end of the body portion or be located at two ends of the body portion respectively. During charging and discharging of the battery 100, a positive electrode active substance and a negative electrode active substance react with an electrolyte. There are two electrode terminals 24, also two adapting sheets 25 are provided, the positive tab is connected to one electrode terminal 24 via one adapting sheet 25, and the negative tab is connected to the other electrode terminal 24 via the other adapting sheet 25.

According to some embodiments of this application, refer FIG. 4, FIG. 4 is a schematic diagram of an electrode assembly 23 according to some embodiments of this application. This application provides an electrode assembly 23. The electrode assembly 23 is a wound electrode assembly and includes a first separator 231 and a second separator 232. A difference between a number of winding turns of the first separator 231 and a number of winding turns of the second separator 232 is greater than or equal to 1.

The electrode assembly 23 also includes a first electrode plate 233 and a second electrode plate 234 with opposite polarities, and the wound electrode assembly with the wound structure can be formed by stacking and winding the first electrode plate 233, the first separator 231, the second electrode plate 234, and the second separator 232, or can be formed by stacking and winding the first separator 231, the first electrode plate 233, the second separator 232, and the second electrode plate 234. The foregoing wound forms can ensure that there is a separator between the adjacent first electrode plate 233 and second electrode plate 234, to isolate the first electrode plate 233 from the second electrode plate 234, thereby avoiding a short circuit between the first electrode plate 233 and the second electrode plate 234. The winding direction of the wound electrode assembly refers to a moving direction from inside to outside starting from a specific point in an entity diagram of the wound electrode assembly shown in FIG. 4 along the first electrode plate 233, the first separator 231, the second electrode plate 234, or the second separator 232, and there are two winding directions, namely, a clockwise direction and a counterclockwise direction. For example, as shown in FIG. 4, the winding direction of the wound electrode assembly is clockwise.

One turn refers to one cycle starting at a specific point, namely a starting end, on the wound electrode assembly along the winding direction and ending at another point positioned as a stopping end. The stopping end, the starting end, and a center of the turn are on a straight line. The starting end is between the stopping end and the center of the circle, and a half turn is a half of the foregoing turn.

In the electrode assembly 23, the first electrode plate 233 can be a positive electrode plate, and the second electrode plate 234 can be a negative electrode plate; and a main body of the first electrode plate 233 is made of aluminum, and a main body of the second electrode plate 234 is made of copper. Alternatively, the first electrode plate 233 is the negative electrode plate, and the second electrode plate 234 is the positive electrode plate; and a main body of the first electrode plate 233 is made of copper, and a main body of the second electrode plate 234 is made of aluminum. Such arrangement of the first electrode plate 233 and the second electrode plate 234 can simplify arrangement of the wound electrode assembly.

In this embodiment of this application, the difference between the number of winding turns of the first separator 231 and the number of winding turns of the second separator 232 is a positive number, that is, the number of winding turns of the first separator 231 is greater than the number of winding turns of the second separator 232.

The binding force of the separators (general term of the first separator 231 and the second separator 232) is related to the number of winding turns of the separators. In the prior art, the first separator 231 and the second separator 232 are finished synchronously, and the numbers of layers of the separators are equal to the number of winding turns of the separators multiplied by 2. Each time the separator is wound by one turn, two layers of separators (one layer of first separator 231 and one layer of second separator 232) are formed. With the same number of layers of separators, a smaller number of turns of the separators indicate weaker binding force of the separators, which likely causes a large distance between the adjacent first electrode plate 233 and second electrode plate 234 and further likely causes lithium precipitation, thereby reducing safety performance of the battery 100. Synchronous finishing of the first separator 231 and the second separator 232 means that the numbers of winding turns of the first separator 231 and the second separator 232 are the same, a finishing end of the first separator 231 is basically aligned with a finishing end of the second separator 232, and a finishing end of an outward separator does not exceed a finishing end of an inward separator.

It should be noted that if the first separator 231 and the second separator 232 are synchronously finished, the number of winding turns of the separators is the number of layers of the separators divided by 2; or if the first separator 231 and the second separator 232 are asynchronously finished, a larger one of the numbers of winding turns of the first separator 231 and the second separator 232 is the number of winding turns of the separators. In this embodiment of this application, the number of winding turns of the first separator 231 is greater than the number of winding turns of the second separator 232, and therefore, the number of winding turns of the separators is the number of winding turns of the first separator 231. After the second separator 232 is finished, any separator outward of the finishing end of the second separator 232 is the first separator 231, the number of layers of separators is the number of layers of the first separator 231 plus the number of layers of the second separator 232, and the number of winding turns of the separators is the number of winding turns of the first separator 231. For example, as shown in FIG. 4, with reference to a baseline X, there are 4 turns of separators and 7 layers of separators.

In the electrode assembly 23 in this embodiment of this application, because the difference between the number of winding turns of the first separator 231 and the number of winding turns of the second separator 232 is greater than or equal to 1, the number of layers of the separators is less than the number of winding turns of the separators multiplied by 2; and because length of the first separator 231 is at least one turn greater than length of the second separator 232, within a length of the first separator 231 beyond the second separator 232, the first separator 231 is wound by at least one more turn than the second separator 232. With the same number of layers of separators, in comparison with synchronous finishing of the first separator 231 and the second separator 232, in this embodiment of this application, an increased number of winding turns of the separators and increased binding force of the separators can reduce a distance between the adjacent first electrode plate 233 and second electrode plate 234 and the migration distance of lithium ions. Based on the kinetic performance, a migration capability of lithium ions is improved, which reduces or avoids occurrence of the lithium precipitation, thereby improving safety of the battery cell 20.

According to some embodiments of this application, optionally, as shown in FIG. 4, a starting end of the first separator 231 is located inward of the second separator 232, and a finishing end of the second separator 232 is located inward of the first separator 231.

Inward refers to a side closer to a winding center, and outward refers to a side farther away from the winding center of the electrode assembly 23. The starting end of the first separator 231 is located inward of the second separator 232, that is, the starting end of the first separator 231 is closer to the winding center of the electrode assembly 23 than the second separator 232. When the first separator 231, the second separator 232, the first electrode plate 233, and the second electrode plate 234 are wound to form the wound structure, the first separator 231 is located inward of the two separators. The finishing end of the second separator 232 is located inward of the first separator 231, that is, when the second separator 232 is finished, the first separator 231 wraps the finishing end of the second separator 232, and the first separator 231 is provided on a side, farther away from the winding center of the electrode assembly 23, of the finishing end of the second separator 232.

A position of the first separator 231 determines that the first separator 231 is an inward one of the two separators, and the first separator 231 wraps the finishing end of the second separator 232, so as to improve the binding force of the separators. The inward separator refers to one of the first separator 231 and the second separator 232, that has a starting end closer to the winding center of the electrode separator 23 when the first separator 231, the second separator 232, the first electrode plate 233 and the second electrode plate 234 are wound.

A situation in which the same number of winding turns of the separators is equivalent to an embodiment in which the first separator 231 and the second separator 232 are finished synchronously. In this application, when the first separator 231 is an inward one of the two separators, the number of winding turns of the second separator 232 is reduced, thereby reducing structural space of the electrode assembly 23 and improving energy density of the battery cell 20.

In another embodiment of this application, the starting end of the second separator 232 is located inward of the first separator 231, and a finishing end of the second separator 232 is located inward of the first separator 231. That is, the second separator 232 is an inward one of the two separators.

According to some embodiments of this application, optionally, the difference between the number of winding turns of the first separator 231 and the number of winding turns of the second separator 232 is less than or equal to 5.

The number of winding turns of the first separator 231 being greater than the number of winding turns of the second separator 232 mainly means that the first separator 231 is wound by more turns than the second separator 232 after the second separator 232 is finished. A greater difference between the number of winding turns of the first separator 231 and the number of winding turns of the second separator 232 indicates a greater binding force of the separator. However, if the difference between the number of winding turns of the first separator 231 and the number of winding turns of the second separator 232 is excessively large, the number of winding turns of the separator is excessively large, and therefore, the separator occupies large structural space, thereby affecting the energy density of the battery cell 20.

When the difference between the number of winding turns of the first separator 231 and the number of winding turns of the second separator 232 is less than or equal to 5, it can be ensured that the separators have large binding forces. The difference between the number of winding turns of the first separator 231 and the number of winding turns of the second separator 232 should not be excessively large, so that the energy density of the battery cell 20 is hardly affected.

According to some embodiments of this application, optionally, the difference between the number of winding turns of the first separator 231 and the number of winding turns of the second separator 232 is an integer.

The difference between the number of winding turns of the first separator 231 and the number of winding turns of the second separator 232 is an integer, for example, 1, 2, 3, 4, or 5. The difference between the number of winding turns of the first separator 231 and the number of winding turns of the second separator 232 is the integer, which means that the finishing end of the first separator 231 is more wound by an integer number of turns than the finishing end of the second separator 232. The first separator 231 and the second separator 232 are finished in the same region, so that the finishing end of the first separator 231 and the finishing end of the second separator 232 can be fixed simultaneously, thereby ensuring a binding effect of the separator.

According to some other embodiments of this application, optionally, the difference between the number of winding turns of the first separator 231 and the number of winding turns of the second separator 232 may alternatively be a decimal. For example, the difference between the number of winding turns of the first separator 231 and the number of winding turns of the second separator 232 is 1.25, 1.5, 1.75, 2.25, 2.5, 2.75, 3.25, 3.5, 3.75, 4.25, 4.5, or 4.75, or the like. When the difference between the number of winding turns of the first separator 231 and the number of winding turns of the second separator 232 is the decimal, a position of the finishing end of the first separator 231 is arranged flexibly, so as to facilitate finishing of the first separator 231.

According to some embodiments of this application, optionally, as shown in FIG. 4, the difference between the number of winding turns of the first separator 231 and the number of winding turns of the second separator 232 is 1.

When the first separator 231 is wound by one more turn than the second separator 232, the finishing end of the first separator 231 wraps the finishing end of the second separator 232, the finishing end of the first separator 231 and the finishing end of the second separator 232 are aligned, and the finishing end of the first separator 231 does not exceed the finishing end of the second separator 232, so as to facilitate finishing of the electrode assembly 23.

Because the length of the separator is greater than the length of the electrode plate, the separator wraps the finishing end of the first electrode plate 233 and the finishing end of the second electrode plate 234, to avoid a short circuit between the first electrode plate 233 and the second electrode plate 234. Therefore, finishing of the electrode assembly 23 generally refers to finishing of the separators, and finishing of the separators refers to fixing of the finishing ends of the separators.

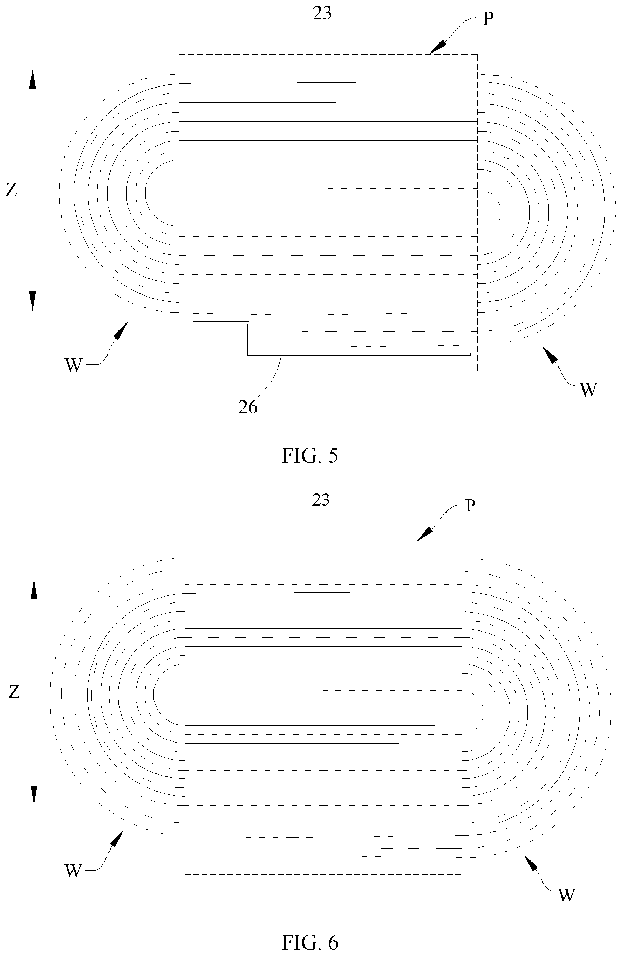

Refer to FIG. 5. FIG. 5 is a schematic diagram of finishing of a separator according to some embodiments of this application. In a fixing method of the finishing end of the separator, in this embodiment of this application, as shown in FIG. 5, the finishing end of the separator is bonded to an outer peripheral surface of a secondary ring outward of the separator via the finishing adhesive 26. The fixing method using the finishing adhesive 26 may make finishing of the finishing end of the separator easy and reliable; and in addition, as compared with a fixing method of applying an adhesive layer, there is no need to dispose an adhesive-applying mechanism, which can reduce a cost of the wound electrode assembly. Certainly, there are multiple types of finishing adhesives 26. For example, the finishing adhesive 26 can be at least one of a single-sided adhesive, a double-sided adhesive, and a hot-melt adhesive. Any one of the foregoing finishing adhesives 26 can effectively bond the finishing end of the separator to the secondary ring outward of the separator, and have a good bonding effect.

The finishing adhesives 26 can be an adhesive tape. The adhesive tape refers to a structure in which an adhesive is applied on at least one surface of a substrate, where the substrate may be made of polyvinyl chloride, polyethylene, polypropylene, polyethylene terephthalate, paper, or other materials.

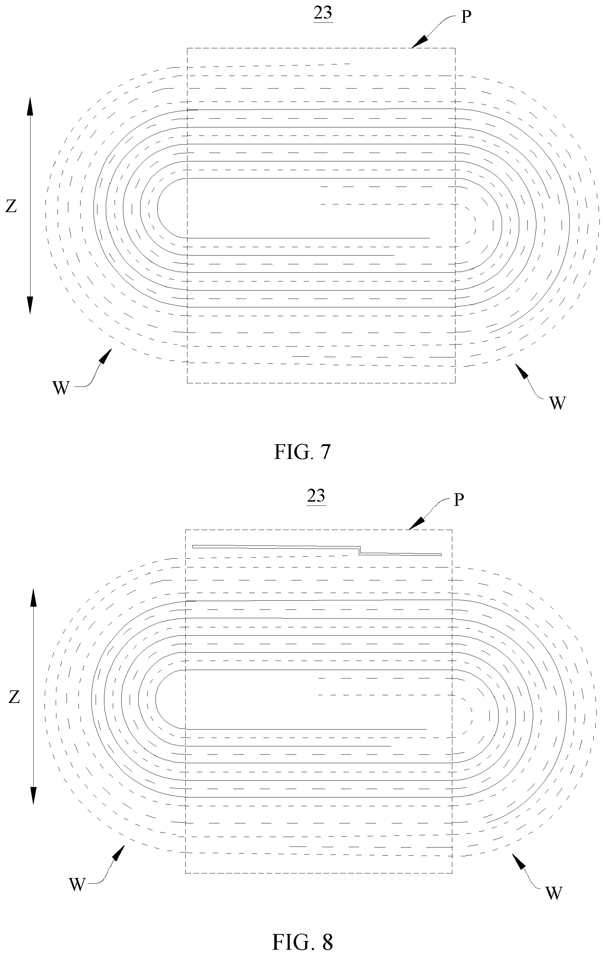

Refer to FIG. 6 and FIG. 7. FIG. 6 is a schematic diagram of an electrode assembly 23 according to some other embodiments of this application; and FIG. 7 is a schematic diagram of an electrode assembly 23 according to still other embodiments of this application. According to some embodiments of this application, optionally, as shown in FIG. 5, FIG. 6, and FIG. 7, the electrode assembly 23 is flat-shaped and the electrode assembly 23 includes a flat region P and two bent regions W, where the two bent regions W are connected to two ends of the flat region P, and both a finishing end of the first separator 231 and the finishing end of the second separator 232 are located at the flat region P.

The flat region P refers to a region with a parallel structure in the electrode assembly 23, that is, surfaces of the first electrode plate 233, the second electrode plate 234, the first separator 231, and the second separator 232 in the flat region P are all flat surfaces. The bent region W refers to a region with a bent structure in the electrode assembly 23, that is, a first electrode plate 233, a second electrode plate 234, a first separator 231, and a second separator 232 in the bent region W are all bent. In other words, surfaces of each layer of a first electrode plate 233, a second electrode plate 234, a first separator 231, and a second separator 232 in the bent region of the electrode assembly 23 are all curved surfaces. The bend region W is formed by winding and bending the first electrode plate 233, the first separator 231, the second electrode plate 234, and the second separator 232.

After the first electrode plate 233, the first separator 231, the second electrode plate 234, and the second separator 232 are wound into a roll and flattened to form the electrode assembly 23, the finishing end of the first separator 231 and the finishing end of the second separator 232 both are located in the flat region P.

Because the bending region W is formed by bending the first electrode plate 233, the first separator 231, the second electrode plate 234, and the second separator 232 during winding, a distance between the adjacent first electrode plates 233 and second electrode plate 234 in the bent region W is larger than a distance between the adjacent first electrode plate 233 and second electrode plate 234 in the flat region P. Especially, a distance between the adjacent first electrode plate 233 and second electrode plate 234 near a ring outward in the bent region W is larger, and therefore, lithium precipitation is likely to occur in the bent region W. Improving the binding force applied by the separator to the first electrode plate 233 and the second electrode plate 234 in the bent region W can alleviate lithium precipitation, that is, can reduce or avoid lithium precipitation.

When the finishing end of the first separator 231 and the finishing end of the second separator 232 are both located in the flat region P, the separator applies large binding force on the electrode plate in the bending region W, which can control a distance between the first electrode plate 233 and second electrode plate 234 that are adjacent in the bent region W, that is, can reduce the distance between the first electrode plate 233 and second electrode plate 234 that are adjacent in the bent region W, so that the migration distance of lithium ions is reduced, thereby improving a migration capability of lithium ions and further reducing or avoiding occurrence of lithium precipitation.

Both the finishing end of the first separator 231 and the finishing end of the second separator 232 are located in the flat region P, thereby achieving a better finishing effect. Especially, when the finishing end of the first separator 231 and the finishing end of the second separator 232 are both wrapped with the same finishing adhesive 26, the first separator 231 and the second separator 232 can be better finished via the finishing adhesive 26.

According to some embodiments of this application, optionally, as shown in FIG. 6, the finishing end of the first separator 231 and the finishing end of the second separator 232 are on a same side of the electrode assembly 23 in a thickness direction, or as shown in FIG. 7, the finishing end of the first separator 231 and the finishing end of the second separator 232 are on two sides of the electrode assembly 23 in the thickness direction.

As shown in FIG. 6 and FIG. 7, a direction Z in the figure is the thickness direction of the electrode assembly 23. Because a thickness direction of each component in the flat region P is consistent with the thickness direction of the electrode assembly 23, the thickness direction of the electrode assembly 23 may alternatively be a thickness direction of the flat region P.

Along the thickness direction of the electrode assembly 23, the winding center of the electrode assembly 23 is in the middle of the flat region P. The flat region P includes two parts spaced apart along the thickness direction of the electrode assembly 23, and the two parts are connected to the same bent region W, that is, the same part is connected to the two bent regions W.

In the embodiment in which the finishing end of the first separator 231 and the finishing end of the second separator 232 are on the same side of the electrode assembly 23 in the thickness direction, the finishing end of the first separator 231 and the finishing end of the second separator 232 are on the same side of the flat region P relative to the winding center of the electrode assembly 23, so that the finishing adhesive 26 is used to finish both the finishing end of the first separator 231 and the finishing end of the second separator 232. Optionally, in the embodiment in which the difference between the number of winding turns of the first separator 231 and the number of winding turns of the second separator 232 is an integer, projection of the finishing end of the first separator 231 is overlapped with projection of the finishing end of the second separator 232 in the thickness direction of the electrode assembly 23, and the finishing end of the second separator 232 is clamped by the first separator 231 at the ring outward of the finishing end and the first separator 231 at a ring inward of the finishing end, to ensure a better finishing effect. For example, in the embodiment in which the difference between the number of winding turns of the first separator 231 and the number of winding turns of the second separator 232 is 1, the finishing end of the first separator 231 is aligned with and attached to the finishing end of the second separator 232. When the finishing end of the first separator 231 is finished via the finishing adhesive 26, the finishing end of the second separator 232 can be finished at the same time. The finishing adhesive 26 has a better binding effect on the separator to ensure the binding force of the separator.

In the embodiment in which the finishing end of the first separator 231 and the finishing end of the second separator 232 are on two sides of the electrode assembly 23 in the thickness direction, the finishing end of the first separator 231 and the finishing end of the second separator 232 are on two sides of the flat region P relative to the winding center of the electrode assembly 23. With the same number of winding turns of the first separator 231, compared with a case that both the finishing end of the first separator 231 and the finishing end of the second separator 232 are on two sides of the electrode assembly 23 in the thickness direction, in the embodiment in which the finishing end of the first separator 231 and the finishing end of the second separator 232 are on the two sides of the electrode assembly 23 in the thickness direction, length of the first separator 231 is greater than length of the second separator 232, the binding force of the separator is greater, and the finishing end of the second separator 232 is clamped by the first separator 231 at the ring inward and the first separator 231 at the ring outward, which achieves a better finishing effect.

In the embodiment in which the finishing end of the first separator 231 and the finishing end of the second separator 232 are on the two sides of the electrode assembly 23 in the thickness direction, optionally, the difference between the number of winding turns of the first separator 231 and the number of winding turns of the second separator 232 can be N+0.5, for example, N=1, 2, 3, 4, ..., that is, N+0.5=1.5, 2.5, 3.5, 4.5, ..., thereby ensuring greater binding force of the separator. For example, as shown in FIG 7, the first separator 231 is an inward one of the two separators, and the difference between the number of winding turns of the first separator 231 and the number of winding turns of the second separator is 1.5.

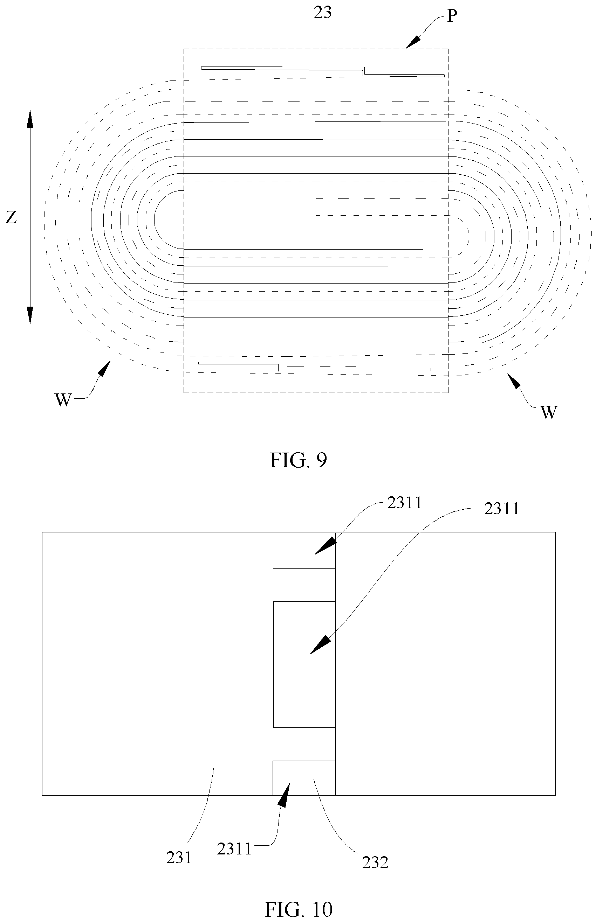

Refer to FIG. 8 and FIG. 9. In the embodiment in which the finishing end of the first separator 231 and the finishing end of the second separator 232 are on the two sides of the electrode assembly 23 in the thickness direction, as shown in FIG. 8, the finishing end of the second separator 232 may be clamped and fixed by the first separator 231 at a ring inward of the finishing end of the second separator 232 and the first separator 231 at a ring outward of the finishing end of the second separator 232, and the electrode assembly 23 has a compact structure, thereby ensuring energy density of the battery cell 20. Alternatively, as shown in FIG. 9, the finishing end of the second separator 232 is fixed in the outer surface of the first separator 231 at the ring inward via the finishing adhesive 26, thereby improving the binding effect on the separator and avoiding looseness of the second separator 232. It should be noted that the outer surface of the first separator 231 at the ring inward refers to a surface of the first separator 231 at the ring inward on a side further away from the winding center of the electrode assembly 23.

In the embodiment in which both the finishing end of the first separator 231 and the finishing end of the second separator 232 are in the flat region P, the finishing end of the first separator 231 may be in the middle of the flat region P, that is, the finishing adhesive 26 fixes the finishing end of the first separator 231 in the middle of the large surface of the flat region P, so as to apply pressure evenly when the finishing adhesive 26 is applied.

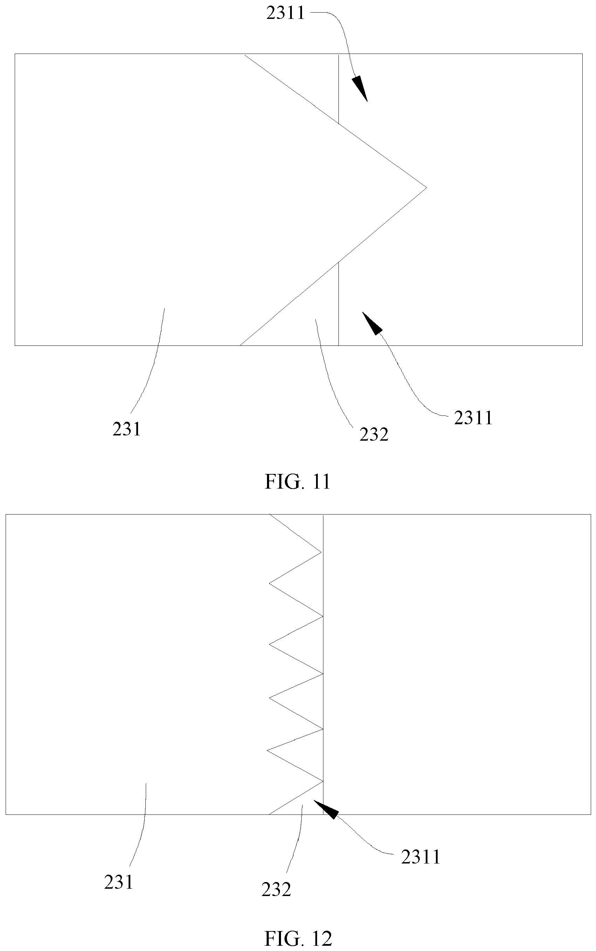

Refer to FIG. 10 to FIG. 12. FIG. 10 is a schematic diagram of a notch 2311 of a finishing end of a first separator 231 according to some embodiments of this application; FIG. 11 is a schematic diagram of a notch 2311 of a finishing end of a first separator 231 according to some other embodiments of this application; and FIG. 12 is a schematic diagram of a notch 2311 of a finishing end of a first separator 231 according to still other embodiments of this application. According to some embodiments of this application, optionally, as shown in FIG. 10 to FIG. 12, the finishing end of the second separator 232 is located inward of the finishing end of the first separator 231, and the finishing end of the first separator 231 is provided with a notch 2311, to expose a part of the finishing end of the second separator 232.

In the embodiment in which the starting end of the first separator 231 is located inward of the second separator 232, the first separator 231 is an inward one of the two separators, finishing of the first separator 231 achieves large bonding force, and when the finishing end of the first separator 231 is provided with the notch 2311 to expose the part of the finishing end of the second separator 232, the finishing adhesive 26 can bond the finishing end of the first separator 231 to the finishing end of the second separator 232, to fix the finishing end of the first separator 231 and the finishing end of the second separator 232, thereby improving binding force of the separator and achieving a better finishing effect.

In the embodiment in which the difference between the number of winding turns of the first separator 231 and the number of winding turns of the second separator 232 is 1, the finishing end of the first separator 231 wraps the finishing end of the second separator 232, and the finishing end of the first separator 231 is aligned with the finishing end of the second separator 232. When the finishing end of the first separator 231 is provided with the notch 2311, a part of the finishing end of the second separator 232 at the notch 2311 can be exposed, so that the finishing adhesive 26 fixes both the finishing end of the first separator 231 and the finishing end of the second separator 232, thereby improving binding force of the separator and achieving a better finishing effect. In some embodiments of this application, when the difference between the number of winding turns of the first separator 231 and the number of winding turns of the second separator 232 is greater than 1 and an exceeding part has a small value, the finishing end of the first separator 231 is provided with the notch 2311, to expose a part of the finishing end of the second separator 232. However, along the winding direction of the electrode assembly 23, the size of the notch 2311 should not be excessively large, to avoid reducing strength of the first separator 231 and affecting the binding force of the first separator 231.

According to some embodiments of this application, optionally, the notch 2311 can be in various shapes. For example, the notch 2311 can be rectangular, triangular, or zigzag. As shown in FIG. 10, the notch 2311 is rectangular, there can be multiple notches 2311, and the multiple rectangles are distributed at intervals in a width direction of the first separator 231; or as shown in FIG. 11, the notch 2311 is triangular, there are two notches 2311, and the two notches 2311 are distributed at two ends in the width direction of the first separator 231; or as shown in FIG. 12, the notch 2311 is zigzag, and the notch 2311 extends in the width direction of the first separator 231.

An area of the notch 2311 determines an exposed area of the finishing end of the second separator 232, and can affect a contact area between the finishing adhesive 26 and the finishing end of the second separator 232. In the premise of ensuring that there is a large contact area between the finishing adhesive 26 and the first separator 231, the area of the notch 2311 can be changed, so that the finishing adhesive 26 better fixes the finishing end of the first separator 231 and the finishing end of the second separator 232.

According to some embodiments of this application, this application also provides a battery cell 20, including the electrode assembly 23 described in any one of the foregoing solutions.

According to some embodiments of this application, this application further provides a battery 100, including the battery cell 20 described in any one of the foregoing solutions.

According to some embodiments of this application, this application further provides an electric device, including the battery cell 20 described in any one of the foregoing solutions, where the battery cell 20 is configured to supply electric energy to the electric device.

According to some embodiments of this application, refer to FIG. 5, this application provides a battery 100 with a square housing, where two electrode assemblies 23 are included in a housing 21, and the electrode assemblies 23 are wound electrode assemblies. The electrode assembly 23 includes a first electrode plate 233, a first separator 231, a second electrode plate 234, and a second separator 232, and the first electrode plate 233, the first separator 231, the second electrode plate 234, and the second separator 232 are stacked and wound into a wound structure. The first electrode plate 233 is the negative electrode plate, and the second electrode plate 234 is the positive electrode plate. The electrode assembly 23 includes a flat region P and two bent regions W connected to two ends of the flat region P. A starting end of the first separator 231 is located outward of the second separator 232, and a finishing end of the second separator 232 is located inward of the first separator 231. The finishing end of the first separator 231 and the finishing end of the second separator 232 are both located in a large surface of the flat region P, and the finishing adhesive 26 synchronously fixes the finishing end of the first separator 231 and the finishing end of the second separator 232. A difference between the number of winding turns of the first separator 231 and the number of winding turns of the second separator 232 is 1, that is, the first separator 231 is wound by one more turn than the second separator 232. As compared with the case that the first separator 231 and the second separator 232 are synchronously finished, with the same number of layers of separators, the first separator 231 is wound by one more turn than the second separator 232, the binding force of the separator is increased, and a distance between two adjacent electrode plates is reduced, especially the distance between the adjacent first electrode plate 233 and second electrode plate 234 close to the ring outward in the bent region W is reduced, so that the migration distance of lithium ions is reduced and the migration capability of lithium ions is improved, thereby reducing or avoiding occurrence of lithium precipitation and improving safety of the battery cell 20.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. An electrode assembly, wherein the electrode assembly is a wound electrode assembly and comprises a first separator and a second separator, wherein
a difference between a number of winding turns of the first separator and a number of winding turns of the second separator is greater than or equal to 1.

2. The electrode assembly according to claim 1, wherein a starting end of the first separator is located inward of the second separator, and a finishing end of the second separator is located inward of the first separator.

3. The electrode assembly according to claim 1 or 2, wherein the difference between a number of winding turns of the first separator and a number of winding turns of the second separator is less than or equal to 5.

4. The electrode assembly according to any one of claims 1 to 3, wherein the difference between a number of winding turns of the first separator and a number of winding turns of the second separator is an integer.

5. The electrode assembly according to any one of claims 1 to 4, wherein the electrode assembly is flat-shaped and the electrode assembly comprises a flat region and two bent regions, wherein the two bent regions are connected to two ends of the flat region, and both a finishing end of the first separator and the finishing end of the second separator are located at the flat region.

6. The electrode assembly according to claim 5, wherein the finishing end of the first separator and the finishing end of the second separator are on a same side of the electrode assembly in a thickness direction, or the finishing end of the first separator and the finishing end of the second separator are on two sides of the electrode assembly in the thickness direction.

7. The electrode assembly according to any one of claims 1 to 6, wherein the finishing end of the second separator is located inward of the finishing end of the first separator, and the finishing end of the first separator is provided with a notch to expose a part of the finishing end of the second separator.

8. A battery cell, comprising the electrode assembly according to any one of claims 1 to 7.

9. A battery, comprising the battery cell according to claim 8.

10. An electric device, comprising the battery cell according to claim 8.
